Europäisches Patentamt

European Patent Office

Office européen des brevets

(19)

(11) EP 0 073 915 B2

(12) NEUE EUROPÄISCHE PATENTSCHRIFT

(45) Veröffentlichungstag und Bekanntmachung des Hinweises auf die Entscheidung über den Einspruch:
31.07.1996 Patentblatt 1996/31

(45) Hinweis auf die Patenterteilung:
28.02.1990 Patentblatt 1990/09

(21) Anmeldenummer: 82106611.5

(22) Anmeldetag: 22.07.1982

(51) Int Cl.6: G05D 23/19, D06B 23/28, D06C 7/00

(54) **Verfahren und Vorrichtung zur Kontrolle der kontinuierlichen Wärmebehandlung einer textilen Warenbahn**

Method and apparatus to control a continuous thermal process for a textile sheet-like material

Procédé et dispositif de traitement thermique en continu d'une matière textile en bande

(84) Benannte Vertragsstaaten:
DE FR GB IT

(30) Priorität: 08.09.1981 DE 3135473
08.12.1981 DE 3148576

(43) Veröffentlichungstag der Anmeldung:
16.03.1983 Patentblatt 1983/11

(73) Patentinhaber: A. Monforts GmbH & Co
D-41006 Mönchengladbach (DE)

(72) Erfinder: Pabst, Manfred, Dipl.-Ing.
D-5000 Köln 40 (DE)

(74) Vertreter: von Creytz, Dietrich, Dipl.-Phys.
Tannenweg 25
D-41844 Wegberg (DE)

(56) Entgegenhaltungen:
DE-A- 1 911 019          DE-A- 2 721 965
FR-A- 1 283 905          FR-A- 2 386 860
US-A- 3 758 960          US-A- 3 961 425

• TEXTILBETRIEB, Band 99, Nr. 4, April 1981, Seite 55, Würzburg, DE."Ein neues System für kontaktlose Temperaturmessungen im Spannrahmen"
• Chemiefasern/Textilindustrie 1981, Seite 689
• Melliand Textilberichte 8/965,s.887

**Beschreibung**

Die Erfindung betrifft eine Vorrichtung zur Kontrolle der kontinuierlichen konvektiven Wärmebehandlung einer textilen Stoffbahn bei stetiger, berührungsloser Messung der Temperatur in einem Spannrahmen oder in einer Hotflue mit mehreren auf dem Bahnförderweg aufeinander folgenden Düsenreihen bzw. Düsenfeldern mit an die Stoffbahn angrenzendem Düsenausströmkanal zum Blasen erhitzter Luft auf die bewegte Stoffbahn und an diesen und an die Stoffbahn angrenzendem Rückströmkanal für den Abfluß der an der Stoffbahn reflektierten Luft. Sie betrifft ferner eine Vorrichtung zur Kontrolle der kontinuierlichen konvektiven Wärmebehandlung einer textilen Stoffbahn bei stetiger, berührungsloser Messung der Temperatur bei Durchströmung der Stoffbahn mit erhitzter Luft in einer Einrichtung nach Siebtrommel- oder Siebbandart.

Eine Vorrichtung dieser Art kann aus dem Bericht in der Zeitschrift "Melliand Textilberichte", 8/965, Seite 887, rechte Spalte, für den Fall des Trocknens angefeuchteter Gewebe entnommen werden. Hiernach kann bei gleichmäßigen Trocknungsbedingungen eine nahezu konstant bleibende Temperatur auf Geweben beobachtet werden, bis eine bestimmte - je nach Faserart verschiedene - kritische Restfeuchte erreicht wird. Von dieser Phase an soll die Trocknungsgeschwindigkeit merklich absinken, außerdem soll ein gleichmäßiges Ansteigen der Gewebetemperatur zu beobachten sein. Sobald die Stoffbahn dann vollkommen trocken ist und keine Energie mehr für das Verdampfen von Wasser verbraucht wird, haben die Verfasser eine annähernde Temperaturkonstanz festgestellt. Sie führen weiter aus, es sei wegen der Anzeige der kritischen Restfeuchte durch den Beginn eines gleichmäßigen Temperaturanstiegs einfacher, einen Temperaturwechsel zu messen als einen abnehmenden Feuchtigkeitsgehalt. Demgemäß wurde im Bekannten vorgesehen, die Temperatur der Ware direkt, aber kontaktlos mit Hilfe von Temperaturfühlern, wie Strahlungspyrometern, stetig zu messen.

Wenn ein Temperaturprofil auf der Länge des Behandlungswegs innerhalb der jeweiligen Maschine, z. B. innerhalb eines Spannrahmens, einer Hotflue oder eines Lochtrommel- oder Siebtrommel- bzw. -bandaggregats, aufgenommen werden soll, um auch für verschiedene Behandlungsbedingungen, bei denen den jeweiligen Anforderungen entsprechend der vorgenannte Temperaturanstieg bzw. "Knick" des Temperaturprofils an jeweils anderen Stellen auf der Länge des Behandlungswegs liegen soll, müssen längs dieses Weges Temperaturfühler in einem das Feststellen des Temperaturknicks überall ermöglichenden Raster angeordnet werden.

Da bekannte, kontaktlos arbeitende und weitgehend universell einsetzbare Temperaturfühler, wie Strahlungspyrometer, sehr aufwendig sind, konnte eine Kontrolle der kontinuierlichen, konvektiven Wärmebehandlung von Stoffbahnen bisher nur in jeweils sehr eingeschränktem Rahmen erfolgen. Es ist dabei zu berücksichtigen, daß eine solche Kontrolle der besseren Anpassung des Temperaturprofils der fraglichen Vorrichtung an die jeweilige Behandlungsaufgabe dem Ziel der Energieeinsparung dient und daß der dazu erforderliche Aufwand natürlich durch die Energieersparnis kompensiert werden soll.

Es sind daher auch schon einfachere, aber nicht kontaktfrei arbeitende Temperaturmeßgeräte zum Betrieb in Wärmebehandlungsmaschinen, wie Spannrahmen, entwickelt worden (vgl. Zeitschrift "Textilbetrieb", April 1981, Seite 55). Hierbei wird die Temperatur in der Grenzschicht der zu kontrollierenden Stoffbahn gemessen. Da ein Flattern der Stoffbahn in Wärmebehandlungsmaschinen, wie Spannrahmen oder Hotflues, nicht zu vermeiden ist und da die Stärke die für die Messung geeigneten Grenzschicht nur wenige Millimeter beträgt, kann eine Berührung zwischen Meßgerät und Stoffbahn nicht ausgeschlossen werden. Das Meßgerät wird daher auf der der Stoffbahn zuzuwendenden Fläche mit einem reibungsmindernden Kunststoff beschichtet. Da die entsprechende, wenn auch geringe Reibung bei der Behandlung vieler Stoffbahnen zu Markierungen führt, ist das Gerät in der Praxis nur in Spezialfällen einzusetzen.

In der DE-A-2 721 965 wird eine Vorrichtung zum Überwachen und Steuern des Trocknungsverlaufs bei der Trocknung von Furnieren und ähnlichem Gut von abwechselnder Anfangsfeuchte und schwankendem Belegungsgrad im Durchlaufverfahren beschrieben. Bei solchem Trocknungsgut handelt es sich nicht um eine Stoffbahn mit überall gleicher Breite, die auf der ganzen Länge gleich behandelt werden soll, sondern um viele Einzelstücke unterschiedlichen Formats mit naturbedingt abwechselnder Anfangsfeuchte, die den Bahnförderweg mit schwankendem Belegungsgrad bedecken. Im Zusammenhang mit der bekannten Vorrichtung sollen daher optimale Trocknungsbedingungen unabhängig von wechselnder Anfangsfeuchte und schwankendem Belegungsgrad bereitgestellt werden. Hierzu werden in mehreren Trocknerfeldern längs des Förderwegs jeweils die Wärmebilanz durch Ermittlung des lokalen Wärmeverbrauchs und der Luftfeuchte gemessen und daraus die zum Einstellen optimale Trocknungsbedingungen erforderlichen Temperaturen und/oder Durchlaufgeschwindigkeiten errechnet. Zum Ermitteln der Wärmebilanzen muß für jede Meßstelle ein Temperaturfühler im Summenluftstrom vor dem Auftreffen auf die Ware und im Summenluftstrom nach der Reflexion an der Ware angeordnet werden. Die Differenz der auf diese Weise gemessenen Lufttemperaturen enthält im Bekannten eine Aussage über den Belegungsgrad des fraglichen Maschinenabschnitts. Da ein schwankender Belegungsgrad vorausgesetzt wird und Wärmebilanzen gemessen werden sollen, müssen die Temperaturfühler beiderseits des Transportweges der Ware so angeordnet werden, da8 sie jeweils die Mischtemperatur des Summenluftstroms erfassen.

Schließlich wird in der Zeitschrift "Chemiefasern/ Textilindustrie", Sept. 1981, Seite 689, ein Spannrahmen-Leitsystem beschrieben, das dazu geeignet sein soll, während der Behandlung auf einem Spannrahmen laufend Informationen über den Prozeßablauf zu erhalten und den Ablauf zu überwachsen sowie zu regeln. Zu diesem Zweck werden an verschiedenen Punkten im Spannrahmen Fühler zum Ermitteln der Wärmebilanz des jeweiligen Spannrahmen-Abschnitts installiert. Da die Fühler die Wärmebilanz des jeweiligen Abschnitts ermitteln sollen, müssen sie seitlich der zu behandelnden Stoffbahn so angeordnet werden, daß sie die Temperatur der zuströmenden Luft und die (Misch) Temperatur der abströmenden Luft erfassen können. Hierbei hängt die Meßgenauigkeit ab von der Breite der jeweils behandelten Stoffbahn, denn eine breitere Stoffbahn nimmt bei sonst gleichem Zustand mehr Wärme auf als eine schmalere Stoffbahn. Die Mischtemperatur der aus dem Düsensystem abströmenden Luft hängt daher außer von der Stoffbahnfeuchte auch von der Stoffbahnbreite ab.

Der Erfindung liegt die Aufgabe zugrunde, eine Vorrichtung der eingangs angegebenen Gattung zu schaffen, welche ein in der Industriepraxis genügend genaues Meßergebnis liefert, um die Steuerung und/oder Regelung der jeweiligen Parameter des Spannrahmens oder der Hotflue aufgrund des Meßergebnisses zu ermöglichen, und welche mit einem Aufwand zu erstellen und zu betreiben ist, der durch die Ersparnis an Energie und Produktionszeit voll aufgewogen wird.

Die erfindungsgemäße Lösung besteht für die Vorrichtung, in der die auf die Stoffbahn geblasene Luft von dieser reflektiert wird, darin, daß für jede längs des Bahnförderwegs durchzuführende Messung ein Thermometerpaar zur Messung der Temperaturdifferenz vorgesehen ist, von dem ein die Temperatur der auf die Stoffbahn strömenden, erhitzten Luft erfassendes Thermometer im Düsenausströmkanal am Düsenkasteneingang und ein die Temperatur der an der Stoffbahn reflektierten Luft erfassendes Thermometer im Rückströmkanal am Rückströmkanaleingang angeordnet ist.

Für die Vorrichtung mit Durchströmung der Stoffbahn mit erhitzter Luft besteht die Lösung darin, daß zum Behandeln der Stoffbahn nach dem Durchströmungsprinzip für jede Messung die Differenz der Temperatur der auf die Stoffbahn auftreffenden Luft und der Temperatur der durch die Stoffbahn geströmten Luft längs des Bahnförderwegs und/oder quer zum Bahnförderweg ein die Temperatur der auf die Stoffbahn auftreffenden Luft erfassendes Thermometer in Richtung der Luftströmung vor der Stoffbahn und ein die Temperatur der durch die Stoffbahn geströmten Luft erfassendes Thermometer in Richtung der Luftströmung hinter der Stoffbahn angeordnet ist. Der Begriff "Luft" steht im vorliegenden Zusammenhang für jedes in Frage kommende Behandlungsgas.

In den erfindungsgemäßen Vorrichtungen werden sehr aufwendige Temperaturfühler, wie Strahlungspyrometer, die die Temperatur der Warenbahn selbst messen, vermieden. Stattdessen werden einfache, die Lufttemperatur erfassende Thermometer paarweise in der in den Ansprüchen angegebenen räumlichen Anordnung eingesetzt, die die Differenz der Temperatur der ankommenden Luft und der reflektierten Luft für den behandelten Stoffbahnbereich messen. Erfindungsgemäß wird an jeder aus einem Thermometerpaar bestehenden Meßstelle auch die von der erhitzten Luft an die Stoffbahn im Bereich der Meßstelle abgegebene Wärmemenge, die der Differenz der Temperatur der ankommenden Luft und der Temperatur der reflektierten oder durchströmten Luft proportional ist, bestimmt. Da ferner die Temperatur der auf die Ware aufgeblasenen Luft als konstant oder zumindest unmittelbar meßbar vorauszusetzen ist, liefert eine erfindungsgemäße differentielle Messung der an die Stoffbahn abgegebenen Wärmeenergie, insbesondere bei Messung an mehreren aufeinanderfolgenden Stellen auf dem Förderweg, ein der Temperatur der Ware selbst entsprechendes Profil.

Da zum Kontrollieren der kontinuierlichen konvektiven Wärmebehandlung erfindungsgemäß lediglich Luftthermometer, z. B. auch Thermoelemente, erforderlich sind, ist der Aufwand so gering, daß der Einbau der Geräte an mehreren auf dem Förderweg der Stoffbahn aufeinanderfolgenden Stellen durch den Gewinn an Energie ersparnis bei Betrieb der Maschine voll aufgewogen wird.

Anhand der schematischen Zeichnung werden weitere Einzelheiten der Erfindung erläutert. Es zeigen:

Fig. 1    einen Ausschnitt durch einen Teil eines SpannrahmenDüsensystems;

Fig. 2    das Diagramm des Temperaturverlaufs auf der Länge des Förderwegs in einer Wärmebehandlungsvorrichtung; und

Fig. 3    einen Ausschnitt durch einen Teil eines Siebbandsystems.

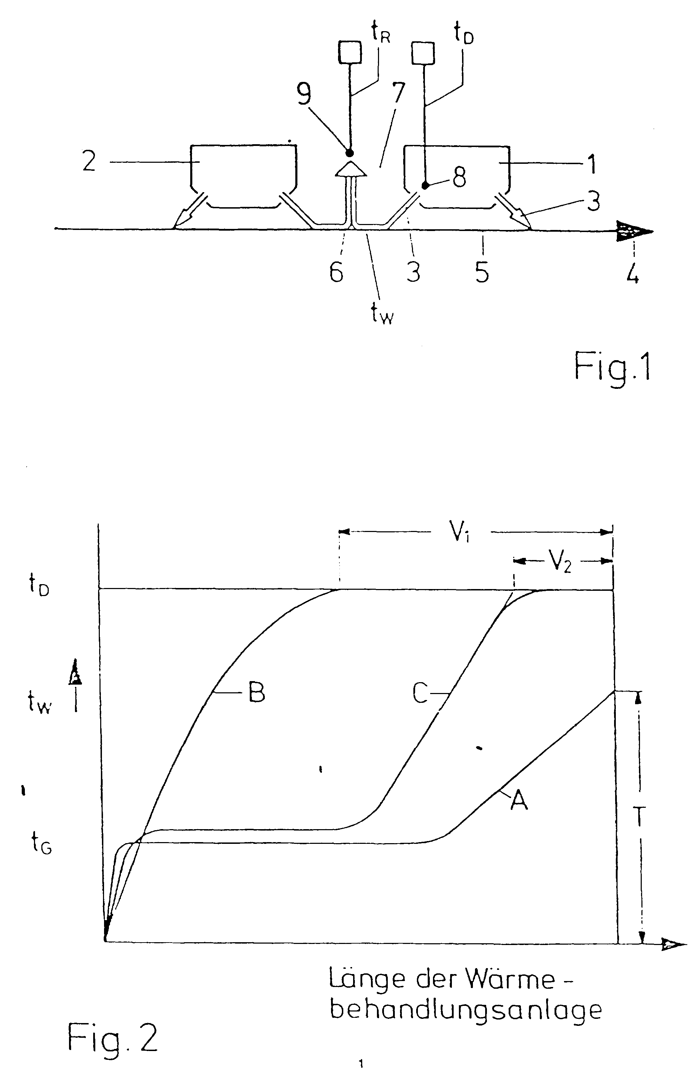

Fig. 1 zeigt zwei im Schnitt symbolisch dargestellte Blaskästen 1 und 2 eines Spannrahmens, aus denen in Pfeilrichtung 3 Luft oder ein anderes erhitztes Behandlungsgas auf die in Pfeilrichtung 4 bewegte textile Warenbahn 5 geblasen wird. Die aus dem Innern der Blaskästen 1 und 2 in Pfeilrichtung 3 fließende erhitze Luft wird an der Warenbahn 5 reflektiert und fließt in Pfeilrichtung 6 in einen zwischen je zwei Blaskästen 1 und 2 angeordneten Rückströmkanal 7 ab. Je nach der Größe der Differenz der Temperatur $t_D$ Ges zu strömenden Gases und der Temperatur $t_W$ der Warenbahn 5 gibt das zuströmende Gas eine bestimmte Wärmemenge Q an die Ware ab und strömt mit der verminderten Temperatur $t_R$ des Rückströmgases in Pfeilrichtung 6 wieder von der Ware 5 ab. Wie oben erläutert wurde, ist die Differenz der Temperatur des zuströmenden Gases und des rückströmenden Gases, also

$$\Delta\, t_L = t_D - t_R,$$

proportional der aus dem erhitzten Gas an die Warenbahn 5 abgegebenen Wärmemenge Q.

Wenn Thermometer 8 und 9 an den entsprechenden Punkten unmittelbar im Düsenkasten 1 und im Rückströmkanal 9 angebracht werden und zum Ermitteln der durch sie gemessenen Temperaturdifferenz $\Delta\, t_L = t_D - t_R$ geschaltet werden, läßt sich an der entsprechenden Stelle aus dem Wert von $\Delta\, t_L$ die örtliche Temperatur der Ware tw angeben. Wenn dann ferner in gewissen vom Einzelfall abhängigen gegenseitigen Abständen Thermometerpaare 8, 9 auf der Länge des Förderwegs der Warenbahn 5 am Düsenkastenausgang und im Rückströmkanaleingang angeordnet werden, können Temperaturprofile gemessen werden, wie sie in Fig. 2 schematisch dargestellt werden.

In Fig. 2 wird der Verlauf der Temperatur $t_w$ der Warenbahn 5 im Verlauf von deren Weg bzw. Länge in der jeweiligen Wärmebehandlungseinrichtung für verschiedene Fälle dargestellt. Die aus dem Düsenkasten 1, 2 auf die Ware 5 strömende Luft soll dabei die konstante Temperatur $t_D$ haben. Höher als $t_D$ kann die Temperatur der Warenbahn also nicht steigen. Wenn dem System eine vorher angefeuchtete textile Warenbahn zwecks reiner Trocknung zugeführt wird, verläuft das Temperaturprofil im Prinzip längs der Kurve A. Ist dagegen eine bereits trockene Ware lediglich zu fixieren, so stellt sich ein Temperaturprofil gemäß Kurve B ein. Der häufigste Fall der Praxis besteht darin, daß eine Ware gleichzeitig zu trocknen und zu fixieren ist. Das entsprechende Temperaturprofil wird in Fig. 2 mit der Kurve C symbolisiert.

Wenn lediglich eine Trocknung einer nassen Ware gewünscht wird, erfolgt bald nach dem Einführen der Ware in die jeweilige Maschine ein Aufheizen auf die sogenannte Kühl-Grenztemperatur $t_G$. Diese bleibt bei allmählichem Verdampfen der in der Ware enthaltenen Flüssigkeit bis zu einer kritischen Restfeuchte im wesentlichen konstant. Bei Erreichen der kritischen Restfeuchte tritt im Temperaturverlauf ein "Knick" mit nachfolgendem Temperaturanstieg ein. Wenn man den Temperaturknick und den Verlauf des anschließenden Temperaturanstiegs kennt bzw. erfindungsgemäß ermittelt hat, kann man die Transportgeschwindigkeit der Ware in der jeweiligen Trocknungseinrichtung so einstellen, daß die Ware am Ausgang einen vorbestimmten Grad T der Trockenheit erreicht hat.

Ist es dagegen die Aufgabe, eine von vornherein trockene Warenbahn lediglich bei relativ hoher Temperatur $t_D$ zu fixieren, so steigt die Temperatur $t_W$ der Ware längs der Kurve B wegen der fehlenden Feuchtigkeit sehr schnell bis hahezu zur Temperatur $t_D$ des zuströmenden Gases an. Bei dieser Fixier-Temperatur ist die Ware dann für eine gewisse Verweilzeit $V_1$, zum Beispiel einige Sekunden, zu fixieren. Erfindungsgemäß ist es möglich, den Beginn des Erreichens der Fixier-Temperatur genau zu bestimmen und auf diese Weise die Transport-Geschwindigkeit der jeweiligen Maschine so einzustellen, daß die Ware mit genau der gewünschten Verweilzeit auf der Fixier-Temperatur gehalten wird. Wenn man demgegenüber den Beginn des Erreichens der Fixier-Temperatur nicht genau feststellen kann, weil beispielsweise der Aufwand zum Ermitteln zu groß erscheint, muß die Transportgeschwindigkeit der Maschine so gewählt werden, daß die erforderliche Verweilzeit auf jeden Fall eingehalten wird. Es wurde daher bisher zur Sicherheit häufig mit viel zu großen Verweilzeiten und einem entsprechend erheblichen Energie- und Produktionsverlust gearbeitet.

Besonders schwierige meßtechnische Probleme ergaben sich bisher dann, wenn eine angefeuchtete Ware zu trocknen und zu fixieren war. Der Bereich des Temperaturanstiegs nach dem Knick im Temperaturverlauf im Anschluß an das Ende des Kühl-Grenztemperatur-Bereichs wandert nämlich stark in Abhängigkeit von dem Befeuchtungsgrad, dem Gewicht der Ware sowie deren Material und dergleichen. Zum Aufnehmen bzw. Orten des Knicks im Anschluß an das Ende des Kühl-Grenztemperatur-Niveaus und des Knicks im Temperaturverlauf nach Erreichen der nahezu der Temperatur $t_D$ gleichenden Fixier-Temperatur sind daher auf der Länge des Transportwegs zahlreiche Meßstellen zum Ermitteln der Temperatur-Differenz $\Delta\, t_L$ erforderlich. Es ist dabei eine Anordnung mit so kleinem Raster erforderlich, daß insbesondere der den Beginn des Erreichens der Fixier-Temperatur kennzeichnende Knick im Temperaturverlauf genau zu bestimmen und so zu regeln ist, daß die restliche Verweilzeit $V_2$ in der jeweiligen Maschine zum Fixieren der Warenbahn ausreicht. Da der Aufwand pro Meßeinheit bei dem erfindungsgemäßen Verfahren im Vergleich zu bekannten Einrichtungen außerordentlich gering ist, tritt gerade in diesem Fall der Vorteil der Erfindung besonders deutlich zutage, weil trotz erheblicher Zahl an Meßstellen die durch die Erfindung zu erzielende Energieersparnis und Produktionssteigerung den Aufwand zum durchführen des erfindungsgemäßen Verfahrens weit übersteigt.

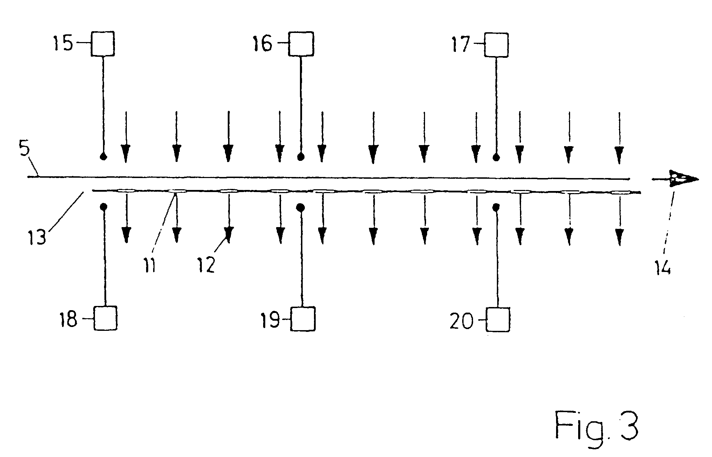

Im Prinzip dasselbe wie für das Spannrahmendüsensystem gilt für die Anwendung der Erfindung auf Loch- bzw. Siebband- oder -trommelaggregate zum Trocknen, Fixieren oder dergl. Gemäß Fig. 3 wird die Warenbahn 5 dabei auf einem Löcher 11 zum Durchströmen in Pfeilrichtung 12 aufweisenden Band 13 in Bahnförderrichtung 14 transportiert und zugleich etwa senkrecht zur Förderrichtung 14 und zur Bahnebene in der Richtung 12 von einem Behandlungsgas durchströmt. Zum Messen der Gastemperatur vor und nach der Bahn 5 dienen Thermometer 15 bis 17 bzw. 18 bis 20. Wenn genug Thermometerpaare längs der Behandlungsstrecke aufgestellt werden, kann auch in diesem Fall ein Temperaturprofil gemäß Fig. 2 aufgenommen werden. Die Zeichnung von Fig. 3 bezieht sich auf ein Siebbandsystem mit ebenem Band, letzteres kann aber auch als in die ebene projizierte Oberfläche eines Lochtrommelsystems betrachtet werden.

Wenn bei dem System nach Fig. 1 oder 3 nicht das Temperaturprofil parallel zur Bahnförderrichtung sondern quer zur Bahnförderrichtung aufzunehmen ist, wird angestrebt, die Luftzuführung zur Bahn bzw. die Luftabsaugung so anzupassen, daß ein Temperaturplateau mit überall auf der Warenbahnbreite gleicher Temperatur entsteht.

## Patentansprüche

1. Vorrichtung zur Kontrolle der kontinuierlichen konvektiven Wärmebehandlung einer textilen Warenbahn (5) bei stetiger, berührungsloser Messung der Temperatur in einem Spannrahmen oder in einer Hotflue mit mehreren auf dem Bahnförderweg (4) aufeinanderfolgenden Düsenreihen bzw. Düsenfeldern mit an die Stoffbahn angrenzendem Düsenausströmkanal zum Blasen erhitzter Luft (3) auf die bewegte Stoffbahn und an diesen und an die Stoffbahn angrenzendem Rückströmkanal für den Abfluß der an der Stoffbahn reflektierten Luft, *dadurch gekennzeichnet,* daß für jede längs des Bahnförderwegs (4) durchzuführende Messung ein Thermometerpaar (8, 9) zur Messung der Temperaturdifferenz vorgesehen ist, von dem ein die Temperatur ($t_D$) der auf die Stoffbahn (5) strömenden erhitzten Luft (3) erfassendes Thermometer (8) im Düsenausströmkanal (1) am Düsenkastenausgang und ein die Temperatur $t_R$ der an der Stoffbahn (5) reflektierten Luft (6) erfassendes Thermometer (9) im Rückströmkanal (7) im Rückströmkanaleingang angeordnet ist.

2. Vorrichtung zur Kontrolle der kontinuierlichen konvektiven Wärmebehandlung einer textilen Stoffbahn (5) bei stetiger, berührungsloser Messung der Temperatur ($t_W$) bei Durchströmung der Stoffbahn mit erhitzter Luft in einer Einrichtung nach Siebtrommel- oder Siebbandart, dadurch gekennzeichnet, daß beim Behandeln der Stoffbahn (5) nach dem Durchströmungsprinzip für jede Messung der Differenz der Temperatur ($t_D$) der auf die Stoffbahn, (5) auftreffenden Luft und der Temperatur ($t_R$) der durch die Stoffbahn geströmten Luft längs des Bahnförderwegs und/oder quer zum Bahnförderweg (14) ein die Temperatur ($t_D$) der auf die Stoffbahn (5) auftreffenden Luft erfassendes Thermometer (15 bis 17) in Richtung (12) der Luftströmung vor der Stoffbahn und ein die Temperatur ($t_R$) der durch die Stoffbahn geströmten Luft erfassendes Thermometer (18 bis 20) in Richtung der Luftströmung hinter der Stoffbahn angeordnet ist (Fig. 3).

## Claims

1. Apparatus for monitoring the continual convective heat treatment of a textile fabric web (5) in continuous, contactless measurement of the temperature in a tentering frame or in a hot flue comprising a plurality of nozzle rows or nozzle bays following one another along the web conveying path (4), with nozzle outlet duct adjacent to the fabric web for blowing heated air (3) onto the moving fabric web and return duct adjacent to this duct and to the fabric web for the outflow of the air reflected from the fabric web, characterized in that, for each measurement to be carried out along the web conveying path (4), a pair of thermometers (8, 9) is provided for measuring the temperature difference, of which one thermometer (8), detecting the temperature ($t_D$) of the heated air (3) flowing onto the fabric web (5) is disposed in the nozzle outlet duct (1) at the nozzle chest outlet and one thermometer (9) detecting the temperature ($t_R$) of the air (6) reflected from the fabric web (5) is disposed in the return duct (7) in the return duct inlet.

2. Apparatus for monitoring the continuous convective heat treatment of a textile fabric web (5) in continuous, contactless measurement of the temperature ($t_W$) with flow of heated air through the fabric web in a device of the sieve drum or sieve belt type, characterized in that, in the treating of the fabric web (5) according to the through-flow principle, for each measurement of the difference between the temperature ($t_D$) of the air striking the fabric web (5) and the temperature ($t_R$) of the air which has flowed through the fabric web, there are disposed along the web conveying path and/or transversely to the web conveying path (14) one thermometer (15 to 17) detecting the temperature ($t_D$) of the air striking the fabric web (5), this thermometer being upstream of the fabric web in the direction (12) of the air flow, and one thermometer (18 to 20) detecting the temperature ($t_R$) of the air which has flowed through the fabric web, this thermometer being downstream of the tabric web in said direction of air flow (Fig. 3).

## Revendications

1. Dispositif pour le contrôle du traitement continu par convection de chaleur d'une nappe de tissu textile (5) moyennant mesurage permanent sans contact de la température dans une rame ou dans une hotflue équipée sur la distance de transport de la nappe (4) de plusieurs rangées successives de tuyères ou champs de tuyères avec canal d'émission contiguë à la nappe de tissu servant au soufflage d'air chauffé (3) sur la nappe de tissu en mouvement et d'un canal de refluement contigu à celui-ci et à la nappe de tissu pour l'écoulement de l'air rejeté par la nappe de tissu, *caractérisé*e en ce que, pour chaque mesurage à effectuer le long de la distance de transport (4) de la nappe, une paire de thermomètres (8, 9) est prévue pour le mesurage de la différence de température, dont un thermomètre (8) est disposé dans le canal de tuyères d'émission (1) à la sortie du réservoir d'approvisionnement des tuyères pour mesurer la température ($t_D$) de l'air chaud (3) projeté sur la nappe de tissu (5) et un thermomètre (9) est disposé dans le canal de refluement (7) pour mesurer la température ($t_R$) de l'air (7) rejeté par la nappe de tissu (5).

2. Dispositif pour le contrôle du traitement continu par convection de chaleur d'une nappe de tissu textile (5) moyennant mesurage permanent sans contact de la température ($t_w$) lors du passage de l'air chauffé à travers la nappe de tissu dans une installation du genre tambour perforé ou tamis sans fin. *caractérisé* en ce que, lors du traitement de la nappe de tissu (5) selon le principe du passage de l'air à travers la nappe de tissu pour chaque mesurage de la différence de température ($t_D$) de l'air donnant sur la nappe de tissu (5) et de la température ($t_R$) de l'aire ayant traversé la nappe de tissu le long de la distance de transport de la nappe (14) et/ou perpendiculairement à celle-ci, un thermomètre (15 à 17) mesurant la température ($t_D$) de l'air donnant sur la nappe de tissu (5) est disposé en direction (12) du jet d'air devant la nappe de tissu et un thermomètre (18 à 20) mesurant la température ($t_R$) de l'air ayant traversé la nappe de tissu est disposé en direction du courant d'air derrière la nappe de tissu (fig. 3).

Fig.1

Länge der Wärmebehandlungsanlage

Fig. 2

Fig. 3